# EUROPEAN PATENT APPLICATION

(11) **EP 4 831 446 A1**
(43) Date of publication of application: **28.10.2026**
(21) Application number: 26174822.2
(22) Date of filing: 27.04.2026
(51) Int. Cl.: F01D 9/04, F01D 25/24

(54) **DOUBLE FLANGE CERAMIC MATRIX COMPOSITE RING AND MANUFACTURING METHOD**

(30) Priority: 25.04.2025 US 202519190166
(71) Applicant: RTX Corporation, Farmington, CT 06032 (US)
(72) Inventor: CAMPBELL, Christian X., West Hartford, 06119 (US); IP, Daniel, Carlsbad, 92010 (US); CRUZ, Jenkins V., San Diego, 92130 (US)
(74) Representative: Dehns

(57) **Abstract**

A composite double flange full-hoop ring (400) has a central section (450) that extends axially between first and second fillets with first and second axial flanges, respectively, with the second fillet (480) having a locally increased thickness. A plurality of full-length woven plies (430) extends a full-length of the first flange (470), first fillet (410), central section (450), second fillet (480), and second flange (490) to define an inner surface and an outer surface of the double flange full-hoop ring (400). Disposed therebetween, at least one first partial-length woven ply (420) extends a first length consisting of the first flange (470), first fillet (410), central section (450), and a first portion of the second fillet (480), and at least one second partial-length woven ply (440) extends a second length consisting of the second flange (490) and a second portion of the second fillet (480) that at least partially overlaps the first portion of the second fillet (480) to provide the locally increased thickness of the second fillet (480).

## Description

### FIELD OF THE INVENTION

The subject matter disclosed herein relates to rings used to support gas turbine engine components and, in particular, to double flange ceramic matrix composite (CMC) rings and associated manufacturing methods therefor.

### BACKGROUND OF THE INVENTION

Gas turbine engines or jet engines, in general, include a fan section, a compressor section, a combustion section, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

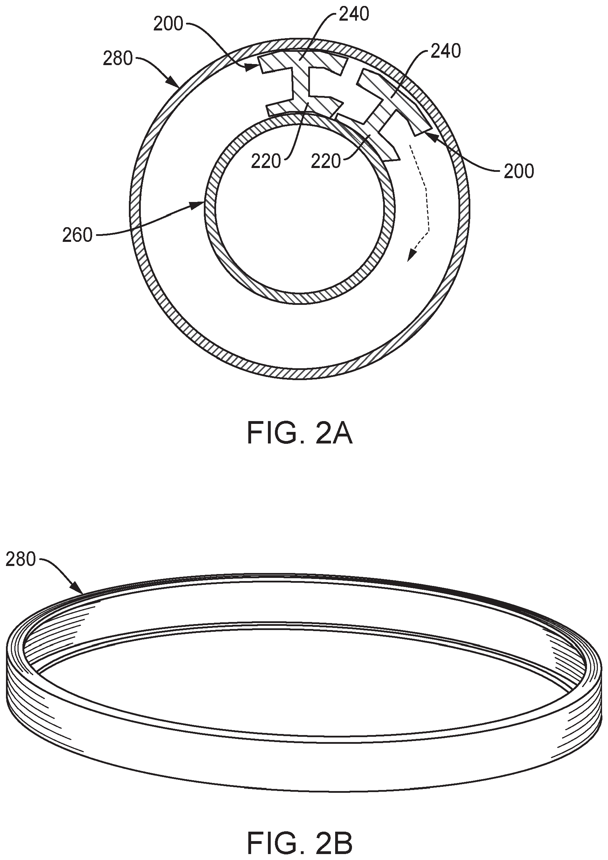

Certain components of gas turbine engines, such as vane segments 200 illustrated in FIG. 2A, with inner diameter (ID) platforms 220 and outer diameter (OD) platforms 240, are thus exposed to the high-energy, high temperature gas flow (gas-path flow) and may be supported by a full-hoop ID ring 260 and a full-hoop OD ring 280 that are also subject to high temperatures. Therefore, it is desirable that such components be made of heat-resistant materials such as ceramic matrix composites (CMCs) because CMC components can withstand much higher operating temperatures than components composed of superalloys.

A full-hoop CMC ring formed with a woven fabric layup presents certain challenges such as complex tooling and compaction difficulties. However, fabric drapability is not generally an issue with a "featureless" uniform thickness composite ring. The addition of single vertical flange reduces drapability of the woven fabric plies by creating a line of double curvature. The addition of a second flange reduces fabric drapability significantly more by creating a second line of double curvature. An example of a double flange full-hoop ring 280 is illustrated in FIG. 2B. While the flanges extend radially inward on double flange full-hoop ring 280, the flanges may also extend radially outward, such as might occur on full-hoop ID ring 260. Accordingly, the flanges discussed herein may apply to both flanges on rings that extend radially-inward and flanges that extend radially-outward.

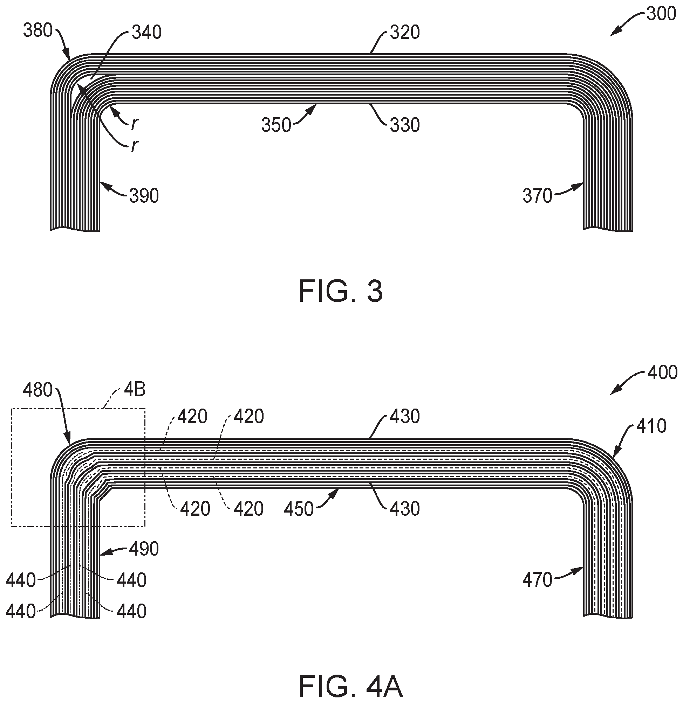

In addition, the actual geometry of such a double flange full-hoop ring 280, as illustrated in FIG. 2B, may not include a uniform thickness, but may have a variable thickness to form specific geometric features. One such feature will now be described with respect to FIG. 3. A fillet shape may be dictated by minimum bend radius of the fabric on the inside fillet, which creates a corresponding large radius on the OD fillet. However, the design may require a "sharper" corner at the OD fillet, for example for aerodynamic reasons or to achieve a flat surface for sealing purposes. One way to do this is illustrated in FIG. 3, which shows a full-hoop ring 300 with an axially-extending central portion 350, a first flange 370, and a second flange 390. The composite double flange full-hoop ring 300 includes two sub-laminates 320 and 330 that are defined by the minimum bend radius *r* of the inside ply that are joined, with a noodle 340 filling the void between the sub-laminates 320 and 330 to form a double flange full-hoop ring 300 with a locally increased thickness for fillet 380. However, such a design with a noodle 340 may have issues with strength and/or drapability of the fabric plies.

The above information disclosed in this Background section is only for understanding of the background of the inventive concepts and, therefore, it may contain information that does not constitute prior art.

### SUMMARY OF THE INVENTION

The present disclosure is directed, in a first aspect, to a composite double flange full-hoop ring having a central section extending axially, a first flange extending radially from a first fillet that extends to a first end of the central section, and a second flange extending radially from a second fillet that extends to a second end of the central section, the second fillet having a locally increased thickness without use of a noodle. The composite double flange full-hoop ring includes: a plurality of full-length woven plies that extend a full-length of the first flange, the first fillet, the central section, the second fillet, and the second flange to define an inner surface of the double flange full-hoop ring and an outer surface of the double flange full-hoop ring. Disposed between the inner surface of the double flange full-hoop ring and the outer surface of the double flange full-hoop ring: at least one first partial-length woven ply extends a first length consisting of the first flange, the first fillet, the central section, and a first portion of the second fillet; and at least one second partial-length woven ply extends a second length consisting of the second flange and a second portion of the second fillet that at least partially overlaps the first portion of the second fillet to provide the locally increased thickness of the second fillet.

In an embodiment of the composite double flange full-hoop ring, the at least one first partial-length woven ply may include a plurality of first partial-length woven plies and the at least one second partial-length woven ply may include a corresponding plurality of second partial-length woven plies.

In another embodiment of any of the above composite double flange full-hoop rings, each respective corresponding pair of first partial-length woven ply and second partial-length woven ply may be separated by at least one full-length woven ply.

In a further embodiment of any of the above composite double flange full-hoop rings, each respective corresponding pair of first partial-length woven ply and second partial-length woven ply may be separated by a plurality of full-length woven plies.

In another embodiment of any of the above composite double flange full-hoop rings, a plurality of full-length woven plies may define the inner surface of the double flange full-hoop ring.

In another embodiment of any of the above composite double flange full-hoop rings, a plurality of full-length woven plies may also define the outer surface of the double flange full-hoop ring.

In another embodiment of any of the above composite double flange full-hoop rings, a number of corresponding pairs of first partial-length woven ply and second partial-length woven ply and an amount of overlap thereof may be selected to provide a pre-determined outer radius of the second fillet.

In a further embodiment of any of the above composite double flange full-hoop rings, each full-length woven ply may wrap around an approximately 90° arc segment of the composite double flange full-hoop ring and each first partial-length woven ply may wrap around an approximately 180° arc segment of the composite double flange full-hoop ring.

In another embodiment of any of the above composite double flange full-hoop rings, the composite may be a ceramic matric composite (CMC).

The present disclosure is also directed, in a second aspect, to a method of forming a composite double flange full-hoop ring having a central section extending axially, a first flange extending radially from a first fillet that extends to a first end of the central section, and a second flange extending radially from a second fillet that extends to a second end of the central section, the second fillet having a locally increased thickness without use of a noodle. The method includes, in any appropriate order: laying up a first plurality of full-length woven plies to extend a full-length of the first flange, the first fillet, the central section, the second fillet, and the second flange to define an inner surface of the double flange full-hoop ring; laying up at least one first partial-length woven ply to extend a first length consisting of the first flange, the first fillet, the central section, and a first portion of the second fillet; laying up at least one second partial-length woven ply to extend a second length consisting of the second flange and a second portion of the second fillet that at least partially overlaps the first portion of the second fillet to provide the locally increased thickness of the second fillet; and laying up a second plurality of full-length woven plies to extend a full-length of the first flange, the first fillet, the central section, the second fillet, and the second flange to define an outer surface of the double flange full-hoop ring.

In an embodiment of the method, the at least one first partial-length woven ply may include a plurality of first partial-length woven plies and the at least one second partial-length woven ply may include a corresponding plurality of second partial-length woven plies, wherein the method may further include laying up at least one full-length woven ply between each respective corresponding pair of first partial-length woven ply and second partial-length woven ply.

In another embodiment of any of the above methods, a number of corresponding pairs of first partial-length woven ply and second partial-length woven ply and an amount of overlap thereof may be selected to provide a pre-determined outer radius of the second fillet.

In a further embodiment of any of the above methods, each full-length woven ply may wrap around an approximately 90° arc segment of the composite double flange full-hoop ring.

In another embodiment of any of the above methods, each first partial-length woven ply may wrap around an approximately 180° arc segment of the composite double flange full-hoop ring.

In another embodiment of any of the above methods, each full-length woven ply may wrap around an approximately 90° arc segment of the composite double flange full-hoop ring, and each first partial-length woven ply may wrap around an approximately 180° arc segment of the composite double flange full-hoop ring.

In another embodiment of any of the above methods, the composite is a ceramic matric composite (CMC).

The present disclosure is further directed, in a third aspect, to a method of forming a ceramic matrix composite (CMC) double flange full-hoop ring having a central section extending axially, a first flange extending radially from a first fillet that extends to a first end of the central section, and a second flange extending radially from a second fillet that extends to a second end of the central section, the second fillet having a locally increased thickness without use of a noodle. The method includes forming a preform by, in any suitable order: laying up a first plurality of full-length woven Silicon Carbide (SiC) plies to extend a full-length of the first flange, the first fillet, the central section, the second fillet, and the second flange to define an inner surface of the double flange full-hoop ring; laying up at least one first partial-length woven SiC ply to extend a first length consisting of the first flange, the first fillet, the central section, and a first portion of the second fillet; laying up at least one second partial-length woven SiC ply to extend a second length consisting of the second flange and a second portion of the second fillet that at least partially overlaps the first portion of the second fillet to provide the locally increased thickness of the second fillet; and laying up a second plurality of full-length woven SiC plies to extend a full-length of the first flange, the first fillet, the central section, the second fillet, and the second flange to define an outer surface of the double flange full-hoop ring.

In an embodiment of the method, the at least one first partial-length woven SiC ply may include a plurality of first partial-length woven SiC plies and the at least one second partial-length woven SiC ply may include a corresponding plurality of second partial-length woven SiC plies, wherein the method may further include laying up a pair of full-length woven SiC plies between each respective corresponding pair of first partial-length woven SiC ply and second partial-length woven SiC ply.

In another embodiment of any of the above methods, a number of corresponding pairs of first partial-length woven SiC ply and second partial-length woven SiC ply and an amount of overlap thereof may be selected to provide a pre-determined outer radius of the second fillet.

In a further embodiment of any of the above methods, each full-length woven SiC ply may wrap around an approximately 90° arc segment of the CMC double flange full-hoop ring, and each first partial-length woven SiC ply may wrap around an approximately 180° arc segment of the CMC double flange full-hoop ring.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIG. 1 schematically illustrates a partial cross section of an exemplary gas turbine engine;
FIG. 2A schematically illustrates a use of inner diameter and outer diameter full-hoop rings to support vane segments of a gas turbine engine;
FIG. 2B illustrates an outer diameter double flange full-hoop ring;
FIG. 3 schematically illustrates a cross-section of a composite double flange full-hoop ring that uses a noodle;
FIG. 4A schematically illustrates a cross-section of an example embodiment of a composite double flange full-hoop ring overlapping plies at a fillet in accordance with the present disclosure;
FIG. 4B schematically illustrates a close-up cross-section of the fillet of FIG. 4A in accordance with the present disclosure;
FIG. 5 illustrates results of a ring arc length study for single flange versus double flange plies; and
FIG. 6 is a flow diagram of an example process in accordance with the present disclosure.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art.

The following discussion omits or only briefly describes conventional features of the disclosed technology that are apparent to those skilled in the art. Reference to a particular embodiment does not limit the scope of the claims attached hereto. Additionally, any examples set forth in this specification are intended to be non-limiting and merely set forth some of the many possible embodiments for the appended claims. Further, particular features described herein can be used in combination with other described features in each of the various possible combinations and permutations. A person of ordinary skill in the art would know how to use the instant invention, in combination with routine experiments, to achieve other outcomes not specifically disclosed in the examples or the embodiments.

Unless otherwise specifically defined herein, all terms are to be given their broadest possible interpretation including meanings implied from the specification as well as meanings understood by those skilled in the art and/or as defined in dictionaries, treatises, etc. Unless defined otherwise, all technical and scientific terms used herein have the same meaning as commonly understood by one of ordinary skill in the art in the field of the disclosed technology. It must also be noted that, as used in the specification and the appended claims, the singular forms "a," "an," and "the" include plural referents unless otherwise specified, and that the terms "includes" and/or "including," when used in this specification, specify the presence of stated features, elements, and/or components, but do not preclude the presence or addition of one or more other features, steps, operations, elements, components, and/or groups thereof. Additionally, methods, equipment, and materials similar or equivalent to those described herein can also be used in the practice or testing of the disclosed technology.

The devices of the present disclosure may be understood more readily by reference to the following detailed description of the embodiments taken in connection with the accompanying drawing figures, which form a part of this disclosure. It is to be understood that this application is not limited to the specific devices, methods, conditions or parameters described and/or shown herein, and that the terminology used herein is for the purpose of describing particular embodiments by way of example only and is not intended to be limiting. All spatial references, such as, for example, proximal, distal, horizontal, vertical, top, upper, lower, bottom, left and right, are for illustrative purposes only and can be varied within the scope of the disclosure. For example, the references "upper" and "lower" are relative and used only in the context to the other, and are not necessarily "superior" and "inferior."

It will further be understood that, although the terms "first," "second," "third," and the like may be used herein to describe various elements, these elements should not be limited by these terms. These terms are only used to distinguish one element from another element. Thus, "a first element" discussed below could be termed "a second element" or "a third element," and "a second element" and "a third element" may be termed likewise without departing from the teachings herein.

Various examples of the disclosed technology are provided throughout this disclosure. The use of these examples is illustrative only, and in no way limits the scope and meaning of the invention or of any exemplified form. Likewise, the invention is not limited to any particular preferred embodiment(s) described herein. Indeed, modifications and variations of the invention may be apparent to those skilled in the art upon reading this specification, and can be made without departing from its spirit and scope. The invention is therefore to be limited only by the terms of the claims, along with the full scope of equivalents to which the claims are entitled.

In the discussion below, axial refers to a direction that coincides with the longitudinal axis of the engine. Radial refers to a direction that is radial with respect to the longitudinal axis of the engine. Circumferential refers to a direction that corresponds to the circumference of a circle around the longitudinal axis of the engine. The leading edge/portion of a structure is the edge/portion that faces into the flow of the hot gases, i.e., faces upstream. The trailing edge/portion of a structure is the edge/portion that the faces away from the flow of the hot gases, i.e., faces downstream.

The present disclosure is directed to a composite double flange full-hoop ring and associated method(s) for forming the ring. The composite double flange full-hoop ring has a central section that extends axially between first and second fillets with first and second axial flanges, respectively, with the second fillet having a locally increased thickness. A plurality of full-length woven plies extends a full-length of the first flange, first fillet, central section, second fillet, and second flange to define an inner surface and an outer surface of the double flange full-hoop ring. Disposed therebetween, at least one first partial-length woven ply extends a first length consisting of the first flange, first fillet, central section, and a first portion of the second fillet, and at least one second partial-length woven ply extends a second length consisting of the second flange and a second portion of the second fillet that at least partially overlaps the first portion of the second fillet to provide the locally increased thickness of the second fillet.

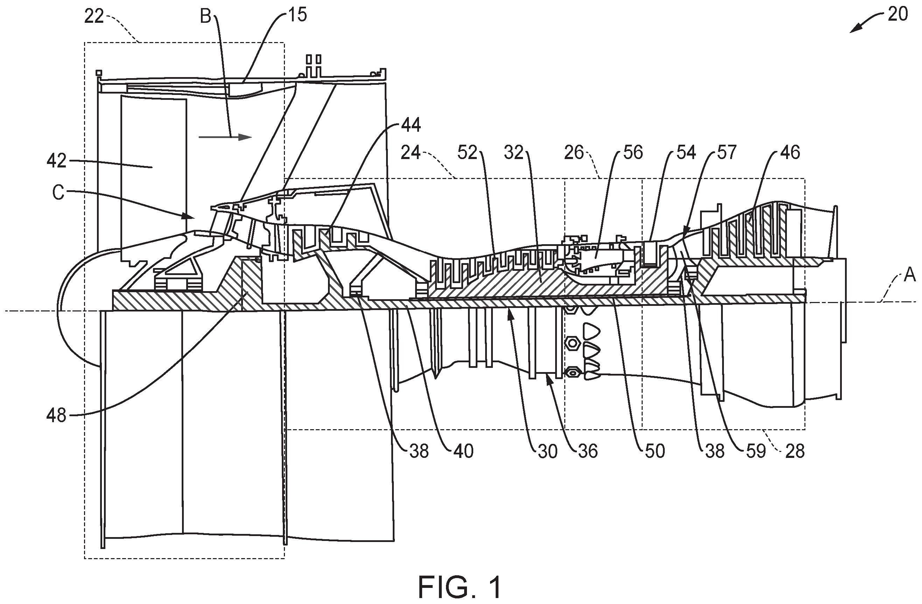

FIG. 1 schematically illustrates an example of a gas turbine engine 20 (i.e., a two-spool turbofan) which includes a fan section 22, a compressor section 24, a combustor section 26, and a turbine section 28. Fan section 22 drives air along a bypass flow path B in a bypass duct defined within a housing 15, and also along a core flow path C for compression in compressor section 24, with subsequent introduction into combustor section 26, followed by expansion through turbine section 28. Although FIG. 1 depicts a two-spool turbofan gas turbine engine, it should be understood that the concepts described herein are not limited to use with two-spool turbofans engines and may be applied to other types of turbine engines.

Engine 20 generally includes a low speed spool 30 and a high-speed spool 32 mounted for rotation about an engine central longitudinal axis A, relative to an engine static structure 36, via several bearing systems 38. Various bearing systems 38 at various locations may alternatively or additionally be provided. The location of bearing systems 38 may be varied as appropriate to the application.

The low speed spool 30 generally includes an inner shaft 40 that interconnects, a first (or low) pressure compressor 44 and a first (or low) pressure turbine 46. Inner shaft 40 is connected to fan 42 through a speed change mechanism, which in this exemplary embodiment is illustrated as a geared structure 48 to drive fan 42 at a lower speed than the low speed spool 30. High speed spool 32 includes an outer shaft 50 that interconnects a second (or high) pressure compressor 52 and a second (or high) pressure turbine 54. Combustor 56 is positioned between high pressure compressor 52 and high-pressure turbine 54. A mid-turbine frame 57 of the engine static structure 36 may be arranged generally between the high-pressure turbine 54 and the low-pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is first compressed by low pressure compressor 44, and then by the high-pressure compressor 52. Thereafter, the core air flow is mixed and burned with fuel in combustor 56, then expanded in high pressure turbine 54 and low-pressure turbine 46. The mid-turbine frame 57 includes airfoils 59 which are in the core airflow path C. The turbines 46 and 54 rotationally drive the respective low speed spool 30 and high-speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low-pressure compressor, or aft of the combustor section 26 or even aft of turbine section 28, and fan 42 may be positioned forward or aft of the location of gear system 48.

The turbine section 28 includes at least one rotor and at least one blade extending radially outwardly from the rotor. The turbine section 28 may further include a blade outer air seal(s) (BOAS(s)). The blade outer air seal can be an assembly of a plurality of BOAS segments that together form an annular shaped shroud around the engine's central longitudinal axis A which is positioned between an outer casing of the engine and the turbine blade(s) of the turbine section.

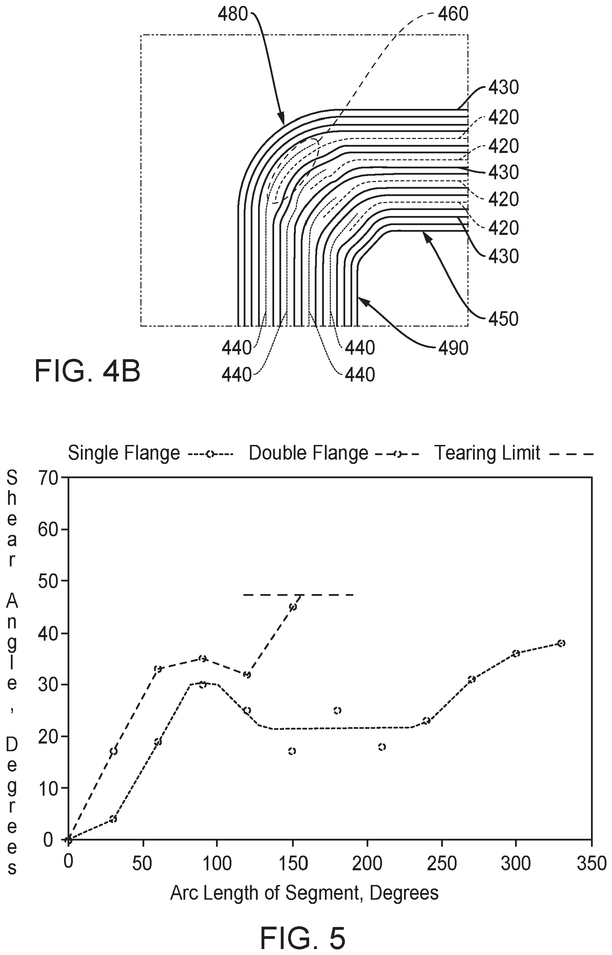

With reference to FIGS. 4A and 4B, a cross sectional view of an embodiment of a composite double flange full-hoop ring 400 with a fillet 480 having a locally increased thickness without the use of a noodle in accordance with the present disclosure is disclosed. While the composite in the present disclosure may be a ceramic matric composites (CMCs) for gas turbine applications, embodiments are not limited thereto and may have application to other composites where drapability, minimum radius, and tearing limit of a woven ply must be considered.

The composite double flange full-hoop ring 400 includes a central section 450 extending axially, a first flange 470 extending radially from a first fillet 410 that extends to a first end of the central section 450. The composite double flange full-hoop ring 400 further includes a second flange 490 extending radially from a second fillet 480 that extends to a second end of the central section 450. In accordance with the present disclosure, the second fillet 480 has a locally increased thickness without use of a noodle, and instead used overlapping plies to achieve a desired geometry, as explained blow.

The composite double flange full-hoop ring 400 includes a plurality of full-length woven plies 430 that extend a full-length of the first flange 470, the first fillet 410, the central section 450, the second fillet 480, and the second flange 490 to define an inner surface of the double flange full-hoop ring 400 and an outer surface of the double flange full-hoop ring 400.

As illustrated in FIGS 4A and 4B, disposed between the inner surface and the outer surface of the double flange full-hoop ring 400, at least one first partial-length woven ply 420 extends a first length consisting of the first flange 470, the first fillet 410, the central section 450, and a first portion of the second fillet 480 as shown in area 460. Similarly, at least one second partial-length woven ply 440 extends a second length consisting of the second flange 490 and a second portion of the second fillet 480 that at least partially overlaps the first portion of the second fillet 480 as shown in the overlapping area 460 so as to provide the locally increased thickness of the second fillet 480.

In one or more embodiments, the at least one first partial-length woven ply 420 includes a plurality of first partial-length woven plies 420 and the at least one second partial-length woven ply 440 comprises a corresponding plurality of second partial-length woven plies 440. In various embodiments of the present disclosure, each respective corresponding pair of first partial-length woven ply 420 and second partial-length woven ply 440 may be separated by at least one full-length woven ply 430. In the illustrated example, each corresponding pair of first partial-length woven ply 420 and second partial-length woven ply 440 is shown as separated by two full-length woven plies 430, but fewer (e.g., 1) or greater (e.g., 3) plies may also be used so as to reduce stress concentrations that may occur from discontinuities caused by the ends of the first and second partial-length woven plies 420 and 440.

Also shown in FIGS. 4A and 4B is that a plurality of full-length woven plies 430 may be used to define the inner surface and/or the outer surface of the double flange full-hoop ring 400.

While the illustrated embodiment of composite double flange full-hoop ring 400 includes four pairs of first and second partial length woven plies 420 and 440, embodiments of the present disclosure are not limited thereto. Indeed, the number of corresponding pairs of first partial-length woven ply 420 and second partial-length woven ply 440 and an amount of overlap thereof within area 460 may be selected to provide a pre-determined outer radius of the second fillet 480, such as for aerodynamic or sealing purposes as discussed in the Background.

It would appear from comparing the two-dimensional cross-section of FIG. 3 and FIG. 4A that the overlapping ply construction of FIG. 4A in accordance with the present disclosure would require more plies than a preform made up of full plies with a noodle per FIG. 3. However, such a comparison fails to consider the number of plies required for a full three-dimensional ring, where it is necessary to determine the number of plies around the circumference of the ring needed for a single layer of the preform. For this analysis, it is necessary to consider the drapability of the fabric as it is applied around the ring.

Indeed, it is difficult to drape a fabric around a ring with a flange due to the double curvature geometry at the fillet. As the fabric is tensioned from forming the first flange, it has much less flexibility to drape around a second vertical flange. FIG. 5 shows the results of a drapability study for a single and a double flange ring. Both show a characteristic rapid rise of shear angle with increasing arc length of a woven ply of fabric. Then the woven plies show a plateau region of constant shear angle that represents the high shear spreading out through the fabric. The third stage is an increase in shear angle as the fabric starts to lock up, likely resulting in fabric defects such as tearing, bridging, or tow distortion.

The result of the study is that the optimum arc length for the double flange woven plies of full-length woven plies 430 is approximately 90° (or 4 plies per layer), while that of the single flange plies used by the first partial-length woven plies 420 is approximately 180° (or 2 plies per layer). In addition, at these arc lengths, the single flange plies of the first partial-length woven plies 420 should be a bit easier to handle than the double flange plies of full-length woven plies 430 because they are further away from their flexibility limit. The second partial-length woven plies 440 have minimal bending at fillet 480, and thus it is possible to use a single 360° ply for each layer. However other designs are possible. For example, the second partial-length woven plies 440 may wrap 180° (2 plies per layer) and be offset, for example by 90°, from corresponding plies 420.

In comparison to the noodle design of FIG. 3, the partial ply embodiment of FIG. 4A uses approximately the same number of plies of woven fabric. However, the mixture of 90° double flange and 180° single flange arc length plies in accordance with the present disclosure may provide a more balanced strength and rigidity in the axial and circumferential directions. The axial strength of the second fillet can be checked against a material allowable debit due to the presence of ply drops in the fillet.

When a woven ply is constrained on both edges, as is typically the case for a circumferential ply drop (see, e.g., FIG. 3), it is either difficult to achieve high accuracy of one of the edges or the fabric could stretch due to its overconstrained state. An axial ply drop resulting from the partial-length woven plies in accordance with the present disclosure (see, e.g., FIG 4A), on the other hand, requires high accuracy only at the ply drop in the radius because the opposite ply drop occurs at the free edge of the layup that is subsequently trimmed. The benefit of exchanging a circumferential ply drop (i.e., of FIG. 3) for axial ply drops in accordance with the present disclosure should be weighed against the fact that the consequence of not hitting ply drop locations is more severe in the axial location, where a misplaced ply drop could negatively affect the material build-up/distribution in the radius (increased variation of fiber volume).

Accordingly, based upon the results of FIG. 5, each full-length woven ply may wrap around an approximately 90° arc segment of the composite double flange full-hoop ring and each first partial-length woven ply may wrap around an approximately 180° arc segment of the composite double flange full-hoop ring.

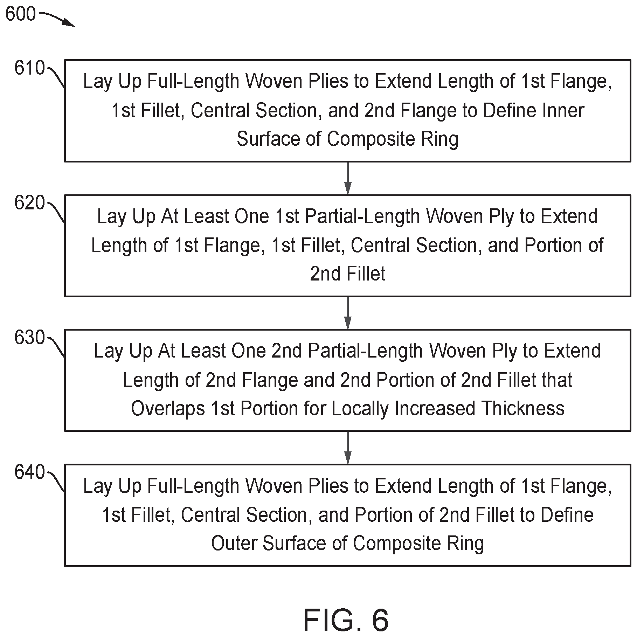

With reference to FIG. 6, a method 600 of forming a composite double flange full-hoop ring having a central section extending axially, a first flange extending radially from a first fillet that extends to a first end of the central section, and a second flange extending radially from a second fillet that extends to a second end of the central section, the second fillet having a locally increased thickness without use of a noodle is disclosed.

The method 600 includes a step 610 of draping a first plurality of full-length woven plies to extend a full-length of the first flange, the first fillet, the central section, the second fillet, and the second flange to define an inner surface of the double flange full-hoop ring.

Step 620 includes draping at least one first partial-length woven ply to extend a first length consisting of the first flange, the first fillet, the central section, and a first portion of the second fillet, and step 630 includes draping at least one second partial-length woven ply to extend a second length consisting of the second flange and a second portion of the second fillet that at least partially overlaps the first portion of the second fillet to provide the locally increased thickness of the second fillet.

Step 640 includes draping a second plurality of full-length woven plies to extend a full-length of the first flange, the first fillet, the central section, the second fillet, and the second flange to define an outer surface of the double flange full-hoop ring.

In one or more embodiments, the at least one first partial-length woven ply of step 620 may include a plurality of first partial-length woven plies and the at least one second partial-length woven ply of step 630 may include a corresponding plurality of second partial-length woven plies. In such embodiments, the method 600 may further include draping at least one full-length woven ply between each respective corresponding pair of first partial-length woven ply and second partial-length woven ply. In one or more other embodiments, draping at least one full-length woven ply between each respective corresponding pair of first partial-length woven ply and second partial-length woven ply may include draping a plurality of full-length woven plies between each respective corresponding pair of first partial-length woven ply and second partial-length woven ply.

In one or more embodiments of method 600, a number of corresponding pairs of first partial-length woven ply and second partial-length woven ply and an amount of overlap thereof may be selected to provide a pre-determined outer radius of the second fillet.

In various embodiments, each full-length woven ply may wrap around an approximately 90° arc segment of the composite double flange full-hoop ring, and/or each first partial-length woven ply may wrap around an approximately 180° arc segment of the composite double flange full-hoop ring.

In one or more embodiments, the composite may be a ceramic matric composite (CMC), such as a SiC/SiC composite.

In an embodiment useful for a gas turbine engine, method 600 may include forming a ceramic matrix composite (CMC) double flange full-hoop ring having a central section extending axially, a first flange extending radially from a first fillet that extends to a first end of the central section, and a second flange extending radially from a second fillet that extends to a second end of the central section, the second fillet having a locally increased thickness without use of a noodle.

The method 600 may include forming a preform by: draping a first plurality of full-length woven Silicon Carbide (SiC) plies to extend a full-length of the first flange, the first fillet, the central section, the second fillet, and the second flange to define an inner surface of the double flange full-hoop ring; draping at least one first partial-length woven SiC ply to extend a first length consisting of the first flange, the first fillet, the central section, and a first portion of the second fillet; draping at least one second partial-length woven SiC ply to extend a second length consisting of the second flange and a second portion of the second fillet that at least partially overlaps the first portion of the second fillet to provide the locally increased thickness of the second fillet; and draping a second plurality of full-length woven SiC plies to extend a full-length of the first flange, the first fillet, the central section, the second fillet, and the second flange to define an outer surface of the double flange full-hoop ring.

In a variation of this method 600, the at least one first partial-length woven SiC ply may include a plurality of first partial-length woven SiC plies and the at least one second partial-length woven SiC ply comprises a corresponding plurality of second partial-length woven SiC plies, and the method may further include draping a pair of full-length woven SiC plies between each respective corresponding pair of first partial-length woven SiC ply and second partial-length woven SiC ply.

In one or more embodiments, a number of corresponding pairs of first partial-length woven SiC ply and second partial-length woven SiC ply and an amount of overlap thereof may be selected to provide a pre-determined outer radius of the second fillet.

In a further embodiment, each full-length woven SiC ply may wrap around an approximately 90° arc segment of the CMC double flange full-hoop ring, and each first partial-length woven SiC ply may wrap around an approximately 180° arc segment of the CMC double flange full-hoop ring.

Embodiments in accordance with the present disclosure may provide a full hoop composite ring preform with two vertical flanges that can optimize ply drops in the circumferential and axial direction, and can provide these functions without increasing the overall number of plies used in the preform layup. Embodiments may also provide such a double flange full-hoop ring preform with a fillet having locally increased thickness for a component that meets minimum requirements for both geometric tolerances and minimum strength.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A composite double flange full-hoop ring (400), comprising:
a central section (450) extending axially;
a first flange (470) extending radially from a first fillet (410) that extends to a first end of the central section (450); and
a second flange (490) extending radially from a second fillet (480) that extends to a second end of the central section (450), the second fillet (480) having a locally increased thickness without use of a noodle, wherein:
a plurality of full-length woven plies (430) extends a full-length of the first flange (470), the first fillet (410), the central section (450), the second fillet (480), and the second flange (490) to define an inner surface of the double flange full-hoop ring (400) and an outer surface of the double flange full-hoop ring (400); and
disposed between the inner surface of the double flange full-hoop ring (400) and the outer surface of the double flange full-hoop ring (400):
at least one first partial-length woven ply (420) extends a first length consisting of the first flange (470), the first fillet (410), the central section (450), and a first portion of the second fillet (480); and
at least one second partial-length woven ply (440) extends a second length consisting of the second flange (490) and a second portion of the second fillet (480) that at least partially overlaps the first portion of the second fillet (480) to provide the locally increased thickness of the second fillet (480).

2. The composite double flange full-hoop ring (400) of claim 1, wherein the at least one first partial-length woven ply (420) includes a plurality of first partial-length woven plies (420) and the at least one second partial-length woven ply (440) includes a corresponding plurality of second partial-length woven plies (440).

3. The composite double flange full-hoop ring (400) of claim 2, wherein each respective corresponding pair of first partial-length woven ply (420) and second partial-length woven ply (440) is separated by at least one full-length woven ply (430).

4. The composite double flange full-hoop ring (400) of claim 2, wherein each respective corresponding pair of first partial-length woven ply (420) and second partial-length woven ply (440) is separated by a plurality of full-length woven plies (430).

5. The composite double flange full-hoop ring (400) of any preceding claim, wherein a plurality of full-length woven plies (430) defines the inner surface of the double flange full-hoop ring (400).

6. The composite double flange full-hoop ring (400) of any preceding claim, a plurality of full-length woven plies (430) defines the outer surface of the double flange full-hoop ring (400).

7. The composite double flange full-hoop ring (400) of any preceding claim, wherein a number of corresponding pairs of first partial-length woven ply (420) and second partial-length woven ply (440) and an amount of overlap thereof is selected to provide a pre-determined outer radius of the second fillet (480).

8. A method of forming a composite double flange full-hoop ring (400) having a central section (450) extending axially, a first flange (470) extending radially from a first fillet (410) that extends to a first end of the central section (450), and a second flange (490) extending radially from a second fillet (480) that extends to a second end of the central section (450), the second fillet (480) having a locally increased thickness without use of a noodle, the method comprising:
laying up a first plurality of full-length woven plies (430) to extend a full-length of the first flange (470), the first fillet (410), the central section (450), the second fillet (480), and the second flange (490) to define an inner surface of the double flange full-hoop ring (400);
laying up at least one first partial-length woven ply (420) to extend a first length consisting of the first flange (470), the first fillet (410), the central section (450), and a first portion of the second fillet (480);
laying up at least one second partial-length woven ply (440) to extend a second length consisting of the second flange (490) and a second portion of the second fillet (480) that at least partially overlaps the first portion of the second fillet (480) to provide the locally increased thickness of the second fillet (480); and
laying up a second plurality of full-length woven plies (430) to extend a full-length of the first flange (470), the first fillet (410), the central section (450), the second fillet (480), and the second flange (490) to define an outer surface of the double flange full-hoop ring (400).

9. The method of claim 8, wherein the at least one first partial-length woven ply (420) includes a plurality of first partial-length woven plies (420) and the at least one second partial-length woven ply (440) includes a corresponding plurality of second partial-length woven plies (440), the method further including laying up at least one full-length woven ply (430) between each respective corresponding pair of first partial-length woven ply (420) and second partial-length woven ply (440).

10. The method of claim 9, wherein a number of corresponding pairs of first partial-length woven ply (420) and second partial-length woven ply (440) and an amount of overlap thereof is selected to provide a pre-determined outer radius of the second fillet (480).

11. The method of claim 8, 9 or 10, wherein each full-length woven ply (430) wraps around an approximately 90° arc segment of the composite double flange full-hoop ring (400).

12. The method of claim 8, 9, 10 or 11, wherein each first partial-length woven ply (420) wraps around an approximately 180° arc segment of the composite double flange full-hoop ring (400).

13. The composite double flange full-hoop ring (400) or method of any preceding claim, wherein each full-length woven ply (430) wraps around an approximately 90° arc segment of the composite double flange full-hoop ring (400), and
each first partial-length woven ply (420) wraps around an approximately 180° arc segment of the composite double flange full-hoop ring (400).

14. The composite double flange full-hoop ring (400) or method of any preceding claim, wherein the composite is a ceramic matric composite (CMC).

15. A method of forming a ceramic matrix composite (CMC) double flange full-hoop ring (400) having a central section (450) extending axially, a first flange (470) extending radially from a first fillet (410) that extends to a first end of the central section (450), and a second flange (490) extending radially from a second fillet (480) that extends to a second end of the central section (450), the second fillet (480) having a locally increased thickness without use of a noodle, the method comprising forming a preform by:
laying up a first plurality of full-length woven Silicon Carbide (SiC) plies (430) to extend a full-length of the first flange (470), the first fillet (410), the central section (450), the second fillet (480), and the second flange (490) to define an inner surface of the double flange full-hoop ring (400);
laying up at least one first partial-length woven SiC ply (420) to extend a first length consisting of the first flange (470), the first fillet (410), the central section (450), and a first portion of the second fillet (480);
laying up at least one second partial-length woven SiC ply (440) to extend a second length consisting of the second flange (490) and a second portion of the second fillet (480) that at least partially overlaps the first portion of the second fillet (480) to provide the locally increased thickness of the second fillet (480); and
laying up a second plurality of full-length woven SiC plies (430) to extend a full-length of the first flange (470), the first fillet (410), the central section (450), the second fillet (480), and the second flange (490) to define an outer surface of the double flange full-hoop ring (400),
wherein, optionally, the at least one first partial-length woven SiC ply (420) includes a plurality of first partial-length woven SiC plies and the at least one second partial-length woven SiC ply (440) comprises a corresponding plurality of second partial-length woven SiC plies, the method further including laying up a pair of full-length woven SiC plies (430) between each respective corresponding pair of first partial-length woven SiC ply (420) and second partial-length woven SiC ply (440),
wherein, further optionally:
a number of corresponding pairs of first partial-length woven SiC ply (420) and second partial-length woven SiC ply (440) and an amount of overlap thereof is selected to provide a pre-determined outer radius of the second fillet (480); and/or
each full-length woven SiC ply wraps around an approximately 90° arc segment of the CMC double flange full-hoop ring (400), and each first partial-length woven SiC ply wraps (420) around an approximately 180° arc segment of the CMC double flange full-hoop ring (400).
